# EUROPÄISCHE PATENTSCHRIFT

(11) **EP 0 554 488 B1**
(45) Veröffentlichungstag und Bekanntmachung des Hinweises auf die Patenterteilung: **20.03.1996**
(21) Anmeldenummer: 92101938.6
(22) Anmeldetag: 06.02.1992
(51) Int. Cl.: A23L 2/84

(54) **Verfahren zur selektiven Verminderung des Zuckergehalts von zuckerhaltigen Nahrungsmitteln unter Beibehaltung der originären sensorischen Eigenschaften und danach erhaltene Nahrungsmittel**
Process for selectively reducing the sugar amount in sugar-containing food products preserving their sensory characteristics and foodstuffs containing the same
Procédé pour réduire sélectivement la teneur en sucre des produits alimentaires sucrés en maintenant leurs caractéristiques sensorielles et produit alimentaire le contenant

(43) Veröffentlichungstag der Anmeldung: 11.08.1993
(73) Patentinhaber: ECKES AG, D-55264 Nieder-Olm (DE)
(72) Erfinder: Wiesenberger, Alfred, W-6200 Wiesbaden-Sonnenberg (DE); Kolb, Erich, Dr., W-6501 Nieder-Olm (DE); Stahl, Ulf, Prof., W-1000 Berlin 28 (DE); Harwart, Katharina, W-1000 Berlin 45 (DE)
(74) Vertreter: Dr. Fuchs, Dr. Luderschmidt Dr. Mehler, Dipl.-Ing. Weiss Patentanwälte

(56) Entgegenhaltungen:
- EP-A- 0 223 705
- EP-A- 0 382 010
- CH-A- 632 137
- CH-A- 668 887
- FOOD SCIENCE AND TECHNOLOGY DATABASE AN=92:246 DN=92-01-B0134, International Food Information Service, Berkshire Reading, GB. D.R.J. Grootjen et al.: "Cofermentation of glucose and xylose with immobilized Pichia stipitis in combination with Saccharomyces cerevisiae"
- BIOCHEMICAL ABSTRACTS DATABASE (BIOSIS) AN=89:267456 DN=BA88:3538 Biochemical Abstracts Philadelphia, US. M.P. CEREDA et al.:"Selected yeasts from sorghum juices sorghum-bicolor l. in natural fermentations".
- WORLD PATENTS INDEX LATEST Week 8618, Derwent Publications Ltd., London, GB; AN 86-119300 (18)

## Beschreibung

Die vorliegende Erfindung befaßt sich mit einem Verfahren zur Verminderung des Zuckergehalts von zuckerhaltigen Nahrungsmitteln, wobei mit Ausnahme von "Süße" die originären, spezifischen und sensorischen Eigenschaften des Nahrungsmittels erhalten bleiben sowie mit nach diesem Verfahren erhaltenen Nahrungsmitteln.

Die Anforderungen an die Qualität von Nahrungsmitteln hat sich in diesem Jahrhundert grundlegend gewandelt. Die ernährungsphysiologische Qualität eines Nahrungsmittels basiert auf seinen wertgebenden Inhaltsstoffen, wie z.B. Vitaminen, Mineralstoffen, Ballaststoffen, Proteinen, Fetten und Kohlenhydraten. Während früher energiereiche aber ballaststoffarme Inhaltsstoffe Qualitätskriterien bildeten, neigen heute die Ernährungsexperten dazu, den Gesundheitswert eines Nahrungsmittels eher nach energiearmen, aber ballaststoffreichen Komponenten sowie dem Mineralstoff- und Vitamingehalt zu bewerten. Daneben gewinnt in der heutigen Überflußgesellschaft der Genußwert eines Nahrungsmittels, also seine sensorische Qualität, immer mehr an Bedeutung.

Nun sind aber von Natur aus zuckerhaltige Nahrungsmittel, insbesondere Fruchtsäfte oder auch Honig, Spender von ernährungsphysiologisch wertvollen Vitaminen und Mineralstoffen und besitzen nach wie vor einen hohen Genußwert. Infolge ihres hohen, natürlichen Zuckergehaltes bilden sie aber gleichzeitig ein Nahrungsmittel, das dem modernen Trend im Hinblick auf energiearme und trotzdem genußreiche Nahrung mit hoher Nährstoffdichte entgegensteht. Seit einiger Zeit ist daher der Produzent solch zuckerreicher Nahrungsmittel bemüht, dem Gesundheitsbewußtsein des Konsumenten Rechnung zu tragen, indem der Zuckergehalt der Nahrungsmittel, insbesondere der Fruchtsäfte, reduziert wird. Eine der einfachsten und verbreitetsten Methoden besteht darin, den Fruchtsaftgehalt durch Wasserzugabe herabzusetzen. Die dadurch abnehmende Süße der resultierenden Fruchtsaftgetränke und Nektare wird dann durch Zugabe künstlicher Süßstoffe, die keinen physiologischen Brennwert besitzen, ersetzt. Gleichzeitig wird hierbei der Gehalt an wertgebenden Vitaminen und Mineralstoffen verringert.

Eine andere Möglichkeit, den Zuckergehalt zu senken, besteht im Einsatz von zuckerabbauenden Mikroorganismen. Es ist schon lange bekannt, daß bestimmte Mikroorganismen bei ihrem Wachstum in pflanzlichen Materialien Zucker zu Biomasse zu assimilieren vermögen.

In der CH-A 632137 wird die Herstellung eines Fruchtsaftgetränkes mit im Verhältnis zum originären Ausgangsmaterial vermindertem Zuckergehalt beschrieben, indem der Fruchtsaft einer alkoholischen Gärung unterzogen und das gebildete Ethanol dann destillativ entfernt wird. Hier werden jedoch durch die anaerobe Vergärung in Verbindung mit der Alkoholdestillation die originären sensorischen Eigenschaften des Fruchtsaftes so stark verändert, daß im Hinblick auf die sensorische Qualität von einem "anderen Getränk" gesprochen werden muß. Die CH-A-668887 behandelt die Herstellung eines zuckerfreien oder zuckerarmen Fruchtsaftes, wobei kein Ethanol gebildet wird. Während der Behandlung mit Mikroorganismen werden dem Substrat Nährsalze zugesetzt. Über die sensorischen Eigenschaften des Produktes wird nichts berichtet. Auch in der EP-0S-0382010 wird die Verminderung des Zuckergehalts eines Frucht- oder Gemüsesaftes über den mikrobiologischen Abbau mit Trichosporon brassicae erzielt, wobei ebenfalls dem zu behandelnden Getränk Nährsalze zugesetzt werden. Eine Veränderung der sensorischen Eigenschaften der Ausgangssäfte ist auch hier wegen der Zugabe der Nährsalze nicht zu vermeiden.

Es ist auch bekannt, daß das "Zuckerproblem" in insbesonders nachgesüßten Nahrungsmitteln durch systematisches Reduzieren des zugesetzten Zuckers insofern gelöst werden kann, als die Geschmacksempfindung "süß" nach einer Eingewöhnungszeit auch schon bei geringen Zuckerkonzentrationen deutlich wahrgenommen werden kann, so daß hier die Süßschwelle beim Geschmacksempfinden nach unter korrigiert werden kann. Andererseits steht aber gerade auch bei Früchten bzw. Fruchtsäften das Zucker-Säure-Verhältnis in Korrelation mit dem Geschmacksempfinden, so daß zum Erhalt der originären sensorischen Eigenschaften eines Fruchtsaftes bei Verminderung des Zuckergehaltes gegebenenfalls auch der Säuregehalt entsprechend reduziert werden müßte. Bei keinem der Verfahren nach dem Stand der Technik wird aber über die Möglichkeit berichtet, gleichzeitig Zucker- und Säuregehalt zu vermindern. Für die Akzeptanz eines solchen Produktes wäre aber ein verminderter Säuregehalt ein Vorteil, da ein nur entzuckertes Produkt einseitig sauer schmecken würde. Neben der selektiven Entfernung der Zucker ist gegebenenfalls auch die Säureentfernung für den Erhalt der originären sensorischen Eigenschaften unbedingt erforderlich, um im Vergleich mit bestimmten Diätnektaren Vorteile gegenüber den qualitätsorientierten Konsumenten bieten zu können.

Der Erfindung liegt daher die Aufgabe zugrunde, ein Verfahren zur Verminderung des Zuckergehalts und gegebenenfalls eine gleichzeitige Verminderung des Gehalts an Fruchtsäuren aufzuzeigen, mit dem es möglich ist, die charakteristischen, originären, sensorischen Eigenschaften des jeweiligen zuckerhaltigen Ausgangsprodukts beizubehalten.

Diese Aufgabe wird erfindungsgemäß dadurch gelöst, daß aus verschiedenen Mikroorganismenspezies, welche für den Abbau von Zuckern aus pflanzlichen Materialien geeignet sind, die für das jeweilige Nahrungsmittel am besten geeignete Spezies ermittelt wird, indem jeweils mit den verschiedenen Mikroorganismenspezies behandelte Chargen des Nahrungsmittels vorab einem sensorischen Rangordnungstest gemäß ISO-Richtlinien 8587 (International Standardizing Organization) unterzogen werden und mit der aus dem so erhaltenen Mikroorganismus gezogenen Biomasse das Ausgangsprodukt einer gesteuerten Fermentation ausgesetzt wird.

Hierbei wurde überraschenderweise gefunden, daß es mit dieser mikrobiologischen Verfahrensweise möglich ist, Zucker und Fruchtsäure aus Nahrungsmitteln selektiv zu vermindern oder gar zu entfernen, unter gleichzeitiger Erhaltung der anderen für die sensorischen Eigenschaften des Ausgangsprodukts maßgebenden Inhaltsstoffe. Analytische Messungen ergaben, daß außer Zucker und Fruchtsäuren die Konzentrationswerte der Inhaltsstoffe des erreichten Produkts mit denen des Ausgangsmaterials im wesentlichen übereinstimmten. Durch die Entfernung der Zucker kann also der physiologische Brennwert ("Kaloriengehalt") des betreffenden Nahrungsmittels drastisch gesenkt werden, wodurch sich die Nährstoffdichte erhöhen läßt. Die Produkte sind also im Hinblick auf ernährungsphysiologische Qualität aufgewertet.

Die Auswahl der einzusetzenden Mikroorganismenspezies richtet sich nach zwei Bedingungen. Das erste Auswahlkriterium ist funktioneller Art und erfordert die Fähigkeit des Mikroorganismus, Zucker abbauen zu können. Das zweite Auswahlkriterium ist objektorientiert und besteht in dem Problem, für das jeweilige Nahrungsmittel, zumeist einen Fruchtsaft, die nach sensorischen Gesichtspunkten am besten geeignete Mikroorganismenspezies zu finden. Als analytische Methode wird hierbei die Sensorik eingesetzt, mit der selbst kleinste Unterschiede der einzelnen vom Produkt hervorgerufenen Sinneswahrnehmungen möglich sind, wie sie z.B. beim Geschmackssinn mittels feinster physikalischer Meßinstrumente oder chemischer Methoden nicht ermittelt werden können.

Hierbei wird mittels mehrerer geschulter Sensoriker (gemäß ISO-Norm 6658) für jede eingesetzte Mikroorganismenspezies die sensorische Qualität des mit dieser Spezies erhaltenen Produkts mit dem Geschmack des jeweiligen unbehandelten Ausgangsmaterials als Bezugsstandard verglichen und die einzelnen Mikroorganismenspezies mittels einer Rangordnung zur jeweils über Rang- oder Varianzanalyse ermittelten Reihenfolge der Qualität dieser Produkte in Beziehung gesetzt. Für die Ausbildung der Sensoriker sind ISO-Normen erstellt worden, ebenso für Prüfraum, Prüfgut und anzuwendende Prüfverfahren, so daß auch eine größtmögliche Reproduzierbarkeit gewährleistet ist. Die Durchführung eines solchen Rangordnungstests erfolgt gemäß der dafür erstellten ISO-Norm 8587. Es zeigte sich, daß für die hauptsächlich in Betracht kommenden zuckerhaltigen Fruchtsäfte insbesondere drei Mikroorganismenspezies bestens geeignet sind, nämlich die Hefen Pichia stipitis mit der Hinterlegungsnummer CBS 5774, Debaromyces vanriji mit der Hinterlegungsnummer CBS 6454 und Candida shehatae mit der Hinterlegungsnummer ATCC 22984.

Ist nach einem sensorischen Rangordnungstest die in Bezug auf das eingesetzte spezifische Nahrungsmittel (Fruchtsaft) am besten geeignete Mikroorganismenspezies ermittelt, so muß vor dem Einsatz zur eigentlichen Entzuckerung des Nahrungsmittels aus dieser Mikroorganismenspezies erst noch eine größere Menge an Biomasse herangezüchtet werden. Dies geschieht vorzugsweise durch Inkubation bei 18 bis 30°C auf bewährten Standard-Nährmedien, bestehend z.B. aus Glucose (1 bis 2%), Hefeextrakt (ca. 1%) und Kaliumdihydrogenphosphat (ca. 0,1%). Zusätzlich können diese Anzuchtmedien aber noch auf empirischem Wege zur Konditionierung der Mikroorganismenspezies an das zu entzuckernde Substrat durch Zugabe weiterer Stoffe, wie z.B. Fructose und Pepton angepaßt werden.

Nach der Anzucht der Biomasse wird diese nach vollständiger Befreiung vom Nährmedium zu dem zu entzuckernden Nahrungsmittel in Form von Fruchtsaft oder Fruchtmark in Konzentrationen im Bereich von log 3 bis log 12 KbW/ml (Kolonien bildende Einheiten) gegeben, ohne Zugabe von Nährsalzen.

Liegt der Zucker im Nahrungsmittel u.a. in Form von Saccharose vor, so muß in den meisten Fällen zusätzlich noch Invertase zum mit Biomasse versetzten Substrat gegeben werden, und zwar je nach Ausgangsmaterial und Enzymaktivität zwischen 10 und 1000 mg/l. Normalerweise sind Reinzuchtstämme von zuckerabbauenden Hefen in der Lage, Saccharose zwar nur sehr langsam in nennenswerten Mengen abzubauen, da die Biosynthese der dazu benötigten Invertase in Gegenwart von Glucose infolge Repression blockiert wird. Wird dagegen eine dereprimierte Mutante der Hefe Pichia stipitis, welche bei der Deutschen Sammlung von Mikroorganismen und Zellkulturen unter der Nr. 6692 hinterlegt ist eingesetzt, ist ein Invertasezusatz nicht erforderlich, da diese von der Mutante auch in Gegenwart von Glucose synthetisiert werden kann.

Die mit Biomasse versetzte pasteurisierte Ausgangslösung (Fruchtsaft oder Mark) wird nun in dem Fermentationsprozeß einer Entzuckerung unterworfen. Beim Fermentationsprozeß muß darauf geachtet werden, daß der Sauerstoffgehalt der zu behandelnden Lösungen nicht unter einen Wert sinkt, bei dem anaerobe Abbauwege beschritten werden. Zu diesem Zweck wird der Fermenter, in dem die Entzuckerung stattfindet, kontrolliert belüftet. Auf der anderen Seite darf dabei auch nicht zuviel Sauerstoff zugeführt werden, damit oxydationsempfindliche Inhaltsstoffe des Nahrungsmittels, z.B. Vitamin C im Falle von Orangensaft, nicht oxydiert werden.

Für die Steuerung des Fermentationsprozesses und damit des Grades der Entzuckerung stehen zwei Parameter zur Verfügung: Zum einen die Temperatur, bei welcher die fermentative Entzuckerung durchgeführt wird, zum anderen die Fermentationszeit, zu der die Entzuckerung abgebrochen wird, indem die Biomasse wieder vom behandelten Substrat abgetrennt wird.

Bei der verfahrensmäßigen Fermentation kann man nun beobachten, daß im Substrat zunächst nur Glucose abgebaut wird, wenn als Mikroorganismen die oben angegebenen Reinzuchthefen eingesetzt werden. Erst wenn die Glucose fast vollständig abgebaut ist wird mit dem Abbau der Fructose begonnen.

Für ein definiertes Nahrungsmittel (Fruchtsaft) sind demzufolge über das aktuelle Verhältnis von Glc/Frc und gegebenenfalls noch durch den aktuellen Fruchtsäuregehalt charakteristische sensorische Eigenschaften einstellbar. Der Glc/Frc-Gehalt sowie die Fruchtsäurekonzentration lassen sich dabei über die Parameter Fermentationstemperatur in Verbindung mit Fermentationszeit in Richtung auf optimale Süße bei drastisch reduziertem physiologischen Brennwert einstellen. Es hat sich gezeigt, daß die Temperatur dabei im Bereich von 5 - 40°C variiert werden kann.

Da Glucose und Fructose gleichen physiologischen Brennwert aufweisen, läßt sich z.B. in Orangensaft als Ausgangsmaterial nach Invertierung (Aufspaltung der Saccharose in Glucose und Fructose) bei einem Glc/Frc-Verhältnis des Ausgangsmaterials von nahezu 1 nach vollständigem Abbau der freien Glucose mit der Reinzuchthefe Pichia stipitis (CBS 5774) der physiologische Brennwert schon um die Hälfte des Brennwerts des Ausgangsmaterials senken.

Das süße Geschmacksempfinden ist dabei weniger stark abgesunken als es der prozentualen Entzuckerung entspricht, bedingt durch die höhere Süßkraft der Fructose im Vergleich zur Glucose und Saccharose. Wenn daher der Kaloriengehalt bei einem Getränk aus Orangensaft noch weiter reduziert werden soll, kann auch ein Abbau der Fructose erfolgen nachdem die Glucose vollständig abgebaut ist.

Bei der Entzuckerung überwiegend fructose-haltiger Fruchtsäfte, z.B. Apfelsaft, bei denen im Ausgangsmaterial schon ein Glucose/Fructose-Verhältnis unter 0,5 vorliegt, bildet eine Verminderung des originären Gesamtzuckergehalts um 30% und darüber typische Werte, während bei saccharose-haltigen Fruchtsäften mit einem Glucose-Fructose-Verhältnis von ca. 1:1, wie z.B. in Orangensaft, typische Werte für die Entzuckerung bei 40% liegen. Das Glucose/Fructose-Verhältnis des Endprodukts soll dann unter 0,2 liegen, vorzugsweise unter 0,05. Bei saccharose-freien Fruchtsäften, wie z.B. Traubensaft, ist es vorteilhaft, die Entzuckerung nicht unter 25% absinken zu lassen, wobei sich dann ein Glucose/Fructose-Verhältnis des Endprodukts von mindestens 0,45 einstellt.

Der Abbau der Fruchtsäuren hängt im besonderen Maße noch vom eingesetzten Mikroorganismus ab, da die verwendete Mikroorganismenspezies aber anhand am Substrat orientierter sensorischer Eigenschaften ausgewählt wird, ist das Eintreten oder Nicht-Eintreten eines Fruchtsäureabbaues auf den charakteristischen Geschmack des Fruchtsaftes ausgerichtet. Andererseits hängt der Grad des Säureabbaues auch von der Fermentationszeit ab, so daß hiermit auch Unterschiede in der Geschmacksrichtung gesteuert werden könnten. Typische Werte liegen bei mindestens 20% bzw. mindestens 30% Fruchtsäureabbau.

Die weiter oben beschriebene dereprimierte Mutante von Pichia stipitis (Hinterlegungsnummer DSM 6692) zeigt zusätzlich zur Invertasesynthese in Gegenwart von Glucose die Fähigkeit, Fructose gleichzeitig mit Glucose abbauen zu können, so daß sich hier die Möglichkeit bietet, über Glucose/Fructose-Verhältnisse mit Werten oberhalb 0,2 zu anderen Geschmacksvarianten zu kommen. Weil diese Mutante Glucose und Fructose in ihrem zeitlichen Ablauf fast synchron reduziert, lassen sich Glucose/Fructose-Verhältnisse bei deutlich reduziertem physiologischen Brennwert erzielen, die denen des Ausgangsmaterials ziemlich ähnlich bleiben. Es wurde beobachtet, daß bei einer Entzuckerung des originären Ausgangsprodukts von mindestens 25% das Glc/Frc-Verhältnis nicht unter einen Wert von 0,7 abfiel.

Am Ende der Fermentationszeit kann die Biomasse ganz oder teilweise von dem Fruchtsaftprodukt abgetrennt werden.

Selbstverständlich können vor der Behandlung des pasteurisierten Ausgangsmaterials mit Biomasse nach in der Nahrungsmitteltechnologie bekannten Verfahren empfindliche Bestandteile, wie zum Beispiel Aromastoffe, Farbstoffe, Trub und ähnliches ganz oder teilweise dem Ausgangsmaterial entzogen und nach der Fermentation und der Entfernung der Biomasse der zuckerverminderten Lösung wieder zugesetzt werden. Desgleichen lassen sich nach der Fermentation zur Geschmacksverbesserung und/oder ernährungsphysiologischen Aufwertung Fruchtfleisch, Ballaststoffe, Aromen, künstliche Süßstoffe, Mineralstoffe, Vitamine oder unbehandeltes originäres Ausgangsmaterial zum Produkt des Fermentationsprozesses hinzufügen. Schließlich kann das Fermentationsprodukt noch nach der Abtrennung der Biomasse einer in der Nahrungsmitteltechnologie gebräuchlichen Konzentrierung unterworfen werden.

Im folgenden wird das erfindungsgemäße Verfahren anhand von Ausführungsbeispielen näher erläutert.

### Beispiel 1 Sensorischer Rangordnungstest mit verschiedenen Hefespezies.

Strichkulturen von insgesamt 54 verschiedenen Hefen aus verschiedenen Stammsammlungen wurden unter sterilen Bedingungen in 50 ml einer Nährlösung aus 2% Glucose, 1% Hefeextrakt, 0,1% Kaliumdihydrogenphosphat und 2% Pepton bei 28°C angezüchtet. Die abzentrifugierte, gewaschene Biomasse wurde in je 250 ml Apfel-, Orangen- und Birnensaft gegeben und für 20 Stunden unter derartigem Schütteln bei 30°C bebrütet, daß der Ethanolgehalt 3 g/l nicht übersteigt. Nach Zentrifugation und Pasteurisation wurden die mit verschiedenen Hefen erhaltenen Produkte mittels eines sensorischen Rangfolgetests gemäß ISO-Richtlinien 8587 sensorisch mit dem jeweiligen originären Fruchtsaft verglichen. Die Hefen Pichia stipitis (Hinterlegungsnummer CBS 5774), Debaromyces vanriji (Hinterlegungsnummer CBS 6454) und Candida shehatae (Hinterlegungsnummer ATCC 22984) wurden am besten bewertet.

### Beispiel 2 Verminderung des Zuckergehalts in Apfelsaft

### a) Vorauswahl des Mikroorganismus nach sensorischen Aspekten

Strichkulturen der unter Beispiel 1 gefundenen Reinzuchthefen wurden unter sterilen Bedingungen in 50 ml einer Nährlösung aus 1% Glucose, 1% Fructose, 0,6% Hefeextrakt und 0,3% peptonisierter Milch angezüchtet. Die abzentrifugierte, gewaschene Biomasse wurde steril in zuvor pasteurisierte 250 ml Apfelsaft gegeben und für 20 Stunden unter derartigem Schütteln bei 28°C bebrütet, daß der Ethanolgehalt 3 g/l nicht übersteigt. Nach Zentrifugation und Pasteurisation wurden die mit verschiedenen Hefen erhaltenen Produkte mittels senorischem Rangfolgetest gemäß ISO-Richtlinien 8587 verglichen. Die mit Debaromyces vanriji mit der Hinterlegungsnummer CBS 6454 behandelte Probe wurde am besten bewertet. Die mit Pichia stipitis mit der Hinterlegungsnummer CBS 5774 behandelte Probe wurde geringfügig schlechter bewertet.

### b) Herstellung der Biomasse

Eine Strichkultur von Debaromyces vanriji wurde unter sterilen Bedingungen in 50 ml einer Nährlösung aus 1% Glucose, 1% Fructose, 0,6% Hefeextrakt, 0,3% peptonisierter Milch mit 0,1% Kaliumdihydrogenphosphat in destilliertem Wasser überimpft. Nach Bebrüten bei 20°C unter derartigem Schütteln, daß der Ethanolgehalt 3 g/l nicht übersteigt, wurde noch während der logarithmischen Vermehrungsphase 0,1-1%ig in eine analog zusammengesetzte Nährlösung überimpft und wie vorstehend beschrieben bebrütet. Für die nächste Anzucht wurde ein speziell auf den zu fermentierenden Apfelsaft angepaßtes Nährmedium verwendet. Folgendes Nährmedium hat sich bewährt: 1% Glucose, 1% Fructose, 2% Hefeextrakt, 2% peptonisierte Milch, 0,3% Kaliumdihydrogenphosphat und 0,6% Äpfelsäure in destilliertem Wasser. Die bebrütete Kultur wurde 0,1-1%ig noch während der logarithmischen Vermehrungsphase in dieses Medium überimpft und wie vorstehend beschrieben bebrütet. Nach Zentrifugation bei 2000 g wurden ca. 20-25 g feuchte Biomasse erhalten. Die Biomasse wurde 2 mal mit 100 ml einer 0,85%igen Natriumchloridlösung und anschließend mit sterilem Wasser gewaschen.

### c) Entzuckerung

20 l pasteurisierter Apfelsaft wurden in einen belüftbaren Fermenter überführt, mit 0,5 g Invertase/l versetzt und mit 10 g feuchter Biomasse/l (= 5 log 7 KbE/ml) von Debaromyces vanriji versetzt. Die Suspension wurde bei 28°C insgesamt 22 Stunden unter sterilen Bedingungen belüftet, so, daß sich eine Sauerstoffsättigung von 10% einstellte. Nach 22 Stunden wurde die Biomasse durch Zentrifugation abgetrennt. Am entzuckerten Produkt konnten folgende Kennzahlen gemessen werden:

| Inhaltstoffe | Ausgangssaft | Fermentationszeit 22 h |
|---|---|---|
| Gew.-% Extrakt | 12,1 | 7,4 |
| Gesamtsäure (g/l) | 6,3 | 4,0 |
| Glucose (g/l) | 28,3 | 0,1 |
| Fructose (g/l) | 67,2 | 76,1 |
| Saccharose | 14,0 | 0,2 |
| Glc/Frc | 0,42 | 0,0 |
| Ethanol (g/l) | 0,0 | 0,0 |
| Entzuckerung (%) | 0,0 | 30,3 |
| Entsäuerung (%) | 0,0 | 36,6 |

Die Werte für die Inhaltsstoffe außer Zucker und Gesamtsäure-Wert liegen im Bereich der für Apfelsaft charakteristischen Kennzahlen.

Das Produkt wurde bei 90°C pasteurisiert. Das haltbare, entzuckerte Getränk wies noch das für Apfelsaft typische Aroma, dessen typischen Geschmack sowie dessen typische Farbe auf. Durch den gleichzeitigen Säureabbau wurde ein ausgesprochen leichtes harmonisches Getränk erhalten.

### Beispiel 3 Verminderung des Zuckergehalts von Traubensaft

### a) Vorauswahl des Mikroorganismus nach sensorischen Aspekten

Strichkulturen der gemäß Beispiel 1 ausgewählten 3 Hefespezies wurden unter sterilen Bedingungen in 50 ml einer Nährlösung aus 1% Glucose, 0,6% Hefeextrakt und 0,5% peptonisierter Milch, wie in Beispiel 1 beschrieben angezüchtet. Die abzentrifugierte, gewaschene Biomasse wurde in 250 ml pasteurisierten Traubensaft gegeben und für 20 Stunden unter derartigem Schütteln bei 28°C bebrütet, daß der Ethanolgehalt 3 g/l nicht übersteigt. Nach Zentrifiguation und Pasteurisation wurden die mit den verschiedenen Hefen erhaltenen Produkte mittels Rangfolgetest gemäß ISO-Richtlinien 8587 sensorisch verglichen. Die mit Pichia stipitis (Hinterlegungsnummer CBS 5774) behandelte Probe wurde am besten bewertet. Die mit Candida shehatae (Hinterlegungsnummer ATCC 22984) behandelte Probe wurde nur wenig schlechter bewertet.

### b) Herstellung der Biomasse

Eine Strichkultur von Pichia stipitis wurde unter sterilen Bedingungen in 50 ml einer Nährlösung aus 1% Glucose, 0,6% Hefeextrakt, 0,5% peptonisierter Milch mit 0,1% Kaliumdihydrogenphosphat in destilliertem Wasser überimpft. Nach Bebrüten bei 20°C unter derartigem Schütteln, daß der Ethanolgehalt 3 g/l nicht übersteigt, wurde noch während der logarithmischen Vermehrungsphase 0,1-1%ig in eine analog zusamamengesetzte Nährlösung überimpft und wie vorstehend beschrieben bebrütet. Für die nächste Anzucht wurde ein speziell auf den Traubensaft angepaßtes Nährmedium verwendet. Folgendes Nährmedium hat sich bewährt: 1% Glucose, 2% Hefeextrakt, 2%peptonisierter Milch und 0,3% Kaliumdihydrogenphosphat in destilliertem Wasser. Die bebrütete Kultur wurde 0,1-1%ig noch während der logarithmischen Vermehrungsphase in dieses Medium überimpft und wie vorstehend beschrieben bebrütet. Nach Zentrifugation bei 2000 g wurden ca. 20-25 g feuchte Biomasse / l erhalten. Die Biomasse wurde 2 mal mit 100 ml einer 0,85%igen Natriumchloridlösung und anschließend mit sterilem Wasser gewaschen.

### c) Entzuckerung

20 l pasteurisierter Traubensaft wurden in einen belüftbaren Fermenter überführt und mit 10 g feuchter Biomasse/l (= 5 log 7 KbE/ml) von Pichia stipitis versetzt. Diese Suspension wurde bei 28°C für insgesamt 22 Stunden unter sterilen Bedingungen belüftet, so, daß sich eine Sauerstoffsättigung von 10% einstellte. Nach 20 Stunden wurde die Biomasse durch Zentrifugation abgetrennt. Am entzuckerten Produkt konnten folgende Kennzahlen gemessen werden:

| Inhaltsstoffe | Ausgangssaft | Fermentationszeit 20h |
|---|---|---|
| Gew.-% Extrakt | 17,0 | 7,4 |
| Gesamtsäure (g/l) | 6,5 | 6,4 |
| Glucose (g/l) | 74,1 | 36,8 |
| Fructose (g/l) | 76,3 | 76,1 |
| Glc/Frc | 0,97 | 0,48 |
| Ethanol (g/l) | 0,0 | 0,0 |
| Entzuckerung (%) | 0,0 | 25,0 |

Die Gehalte für die Inhaltsstoffe außer Zucker lagen im Bereich der für Traubensaft charakteristischen Kennzahlen.

Das Produkt wurde bei 90°C pasteurisiert. Das haltbare, entzuckerte Getränk wies noch das für Traubensaft typische Aroma, dessen typischen Geschmack sowie dessen typische Farbe auf. Durch den hohen Restzuckergehalt wurde ein kräftiges, volles Getränk erhalten.

### Beispiel 4 Verminderung des Zuckergehalts von Orangensaft

### a) Vorauswahl des Mikroorganismus nach sensorischen Aspekten

Strichkulturen von den 3 gemäß Beispiel 1 ausgewählten Mikroorganismen wurden unter sterilen Bedingungen in 50 ml einer Nährlösung aus 2% Glucose, 1% Hefeextrakt, 2% peptonisierter Milch und 0,1% Kaliumdihydrogenphosphat wie in Beispiel 1 beschrieben angezüchtet. Die abzentrifugierte, gewaschene Biomasse wurde in 250 ml pasteurisierten Orangensaft gegeben und 20 Stunden lang unter derartigem Schütteln bei 30°C bebrütet, daß der Ethanolgehalt 3 g/l nicht übersteigt. Nach Pasteurisation wurden die mit den 3 verschiedenen Hefen erhaltenen Produkte mittels sensorischem Rangfolgetest gemäß ISO-Richtlinien 8587 sensorisch verglichen. Die mit Pichia stipitis (Hinterlegungsnummer CBS 5774) behandelte Probe wurde am besten bewertet.

### b) Herstellung der Biomasse

Eine Strichkultur von Pichia stipitis wurde unter sterilen Bedingungen in 50 ml einer Nährlösung aus 2% Glucose, 1% Hefeextrakt, 2% Pepton mit 0,1% Kaliumdihydrogenphosphat in destilliertem Wasser überimpft. Nach Bebrüten bei 28°C unter derartigem Schütteln, daß der Ethanolgehalt 3 g/l nicht übersteigt, wurde noch während der logarithmischen Vermehrungsphase 0,1-1%ig in eine analog zusammengesetzte Nährlösung überimpft und wie vorstehend beschrieben bebrütet. Für die nächste Anzucht wurde ein speziell auf Orangensaft angepaßtes Nährmedium verwendet. Folgendes Nährmedium hat sich bewährt: 2% Glucose, 1% Hefeextrakt, 2% Pepton, 0,5% Kaliumdihydrogenphosphat und 1% Zitronensäure in destilliertem Wasser. Die bebrütete Kultur wurde 0,1-1%ig noch während der logarithmischen Vermehrungsphase in dieses Medium überimpft und wie vorstehend beschrieben bebrütet. Nach Zentrifugation bei 2000 g wurden ca. 20-25 g feuchte Biomasse/l erhalten. Die Biomasse wurde 2 mal mit 100 ml einer 0,85%igen Natriumchloridlösung und anschließend mit sterilem Wasser gewaschen.

### c) Entzuckerung

10 l aus Orangensaftkonzentrat, der auf 11,5 Gew.-% Extrakt rückverdünnt und pasteurisiert wurde (ätherische Öle 0,18 ml/l bei 11,5 Gew.-% Extrakt), wurden mit 1 g Invertase versetzt und bei 28 bis 30°C bis zum vollständigen Abbau der Saccharose innerhalb von 1,5 Stunden inkubiert. Danach wurde das Produkt steril in einen belüftbaren Fermenter überführt und mit 8,5 g feuchter Biomasse/l (= 5 log 8 KbE/ml) von Pichia stipitis versetzt. Die Suspension wurde bei 28° C über insgesamt 18 Stunden unter sterilen Bedingungen belüftet, so, daß sich in der Lösung eine Sauerstoffsättigung von 5% einstellte. Nach 18 Stunden wurde die Biomasse durch Zentrifugation abgetrennt. Am entzuckerten Produkt konnten folgende Kennzahlen gemessen werden:

| Inhaltsstoffe | Ausgangssaft | Fermentationszeit 1 10h | Fermentationszeit 2 16h | Fermentationszeit 3 18h |
|---|---|---|---|---|
| Gew.-% Extrakt | 11,5 | 9,2 | 6,9 | 6,5 |
| Zitronensäure (g/l) | 8,8 | 8,6 | 8,6 | 8,5 |
| Glucose (g/l) | 22,7 | 22,8 | 2,6 | 0,0 |
| Fructose (g/l) | 24,6 | 42,6 | 40,7 | 36,2 |
| Saccharose (g/l) | 40,1 | 0,0 | 0,0 | 0,0 |
| Glucose/Fructose | 0,92 | 0,53 | 0,06 | 0,0 |
| Vitamin C (mg/l) | 481 | - | 450 | 445 |
| Kalium (mg/l) | 1960 | - | n.b. | 1620 |
| Calcium (mg/l) | 84 | - | n.b. | . 85 |
| Magnesium (mg/l) | 104 | - | n.b. | 96 |
| Ethanol (g/l) | 0,0 | - | 0,0 | 0,0 |
| Entzuckerung(%) | 0,0 | 25,1 | 50,5 | 59,5 |

Die Gehalte für die Inhaltsstoffe außer Zucker lagen im Bereich der für Orangensaft charakteristischen Kennzahlen.

Das Produkt wurde mit den Orangensäften zugehörigen Mengen an Wasserphase versetzt und bei 85° C auf Flaschen abgefüllt. Das haltbare, entzuckerte Getränk wies noch das für Orangensaft typische Aroma, dessen typischen Geschmack, der durch die fehlende Süße etwas säurebetont und erfrischend war, so wie dessen typische Farbe auf.

### Beispiel 5 Verminderung des Zuckergehalts von entpulptem und entaromatisiertem Orangensaft.

Für die Herstellung der Biomasse wurde als Mikroorganismus Pichia stipitis eingesetzt und wie in Beispiel 4 beschrieben verfahren. Dem aus Konzentrat hergestellten Orangensaft wurde das bei der Konzentrierung abgetrennte Aroma noch nicht wieder zugesetzt (Gehalt an ätherischen Ölen bei 11,5 Gew.-% Extrakt 0 ml/l). Vor der Entzuckerung wurde die sogenannte Bottompulpe weitgehend abgetrennt. Die Entzuckerung wurde gemäß Beispiel 4 vorgenommen.

Nach der Entzuckerung wurden dem Produkt die bei der Konzentrierung abgetrennten Aromen und die zuvor abgetrennte Bottompulpe sowie Orangenfinisherfruchtfleisch wieder zugesetzt. Das so erhaltene Produkt hatte einen fruchttypischen Charakter und entsprach in seinen analytischen Eigenschaften den Kennzahlen des Beispiels 4.

### Beispiel 6 Verminderung des Zuckergehalts von Orangensaft mittels einer dereprimierten Mutante von Pichia stipitis mit der Hinterlegungsnummer DSM 6692.

Als Alternative zum Reinzuchtstamm Pichia stipitis kann auch dessen dereprimierte Mutante mit der Hinterlegungsnummer DSM 6692 eingesetzt werden, die auch in Gegenwart von Glucose Invertase produzieren kann, weshalb auf den Einsatz von zusätzlicher Invertase verzichtet werden kann.

Bis auf den Invertasezusatz wurde wie unter 4b und 4c verfahren. Das Endprodukt zeigte jedoch ein anderes Glc/Frc-Verhältnis, da hierbei Glucose und Fructose nebeneinander abgebaut wurde.

| Inhaltsstoffe | Ausgangssaft | Fermentationszeit 30h |
|---|---|---|
| Gew.-% Extrakt | 11,5 | 7,0 |
| Citronensäure (g/l) | 9,3 | 9,0 |
| Glucose (g/l) | 23,8 | 17,1 |
| Fructose (g/l) | 25,5 | 24,7 |
| Saccharose (g/l) | 39,1 | 1,3 |
| Gluc./Fruc. | 0,93 | 0,72 |
| Ethanol (g/l) | 0,0 | 0,0 |
| Entzuckerung (%) | 0,0 | 51,2 |

## Patentansprüche

1. Mikrobiologisches Verfahren zur selektiven Verminderung des Zuckergehalts von zuckerhaltigen Nahrungsmitteln unter Beibehaltung der mit Ausnahme von "Süße" originären, spezifischen und sensorischen Eigenschaften, dadurch gekennzeichnet, daß
- aus verschiedenen für Zuckerabbau geeigneten Mikroorganismenspezies die für das jeweilige Nahrungsmittel am besten geeignete Spezies ermittelt wird, indem jeweils mit den verschiedenen Mikroorganismenspezies behandelte Chargen des Nahrungsmittels einem sensorischen Rangordnungstest gemäß ISO-Richtlinien 8587 unterzogen werden,
- die so erhaltene Mikroorganismenspezies zur Anzüchtung von Biomasse in einem dafür geeigneten nährstoffhaltigen Kulturmedium inkubiert wird,
- die vom Kulturmedium befreite Biomasse sodann in einer Konzentration im Bereich von log3 bis log12 KbE/ml zu einer Lösung oder dem Mark des jeweils zu entzuckernden Nahrungsmittels gegeben wird, ohne Zugabe von Nährsalzen,
- die mit Biomasse versetzte zuvor pasteurisierte Lösung oder das Mark des Nahrungsmittels bei 5 - 40°C einer Fermentation unterzogen wird, wobei unter kontrollierter Belüftung gerade soviel Sauerstoff zugeführt wird, daß einerseits kein anaerober Abbauweg beschritten wird und andererseits in der Lösung oder Mark des Nahrungsmittels enthaltene oxidationsempfindliche Inhaltsstoffe noch nicht oxidiert werden,
- die Fermentation nach Erreichen des gewünschten Zuckerabbaues und/oder gewünschten Verhältnisses von Glucose/Fructose beendet wird, und
- die Biomasse je nach Wunsch ganz oder teilweise von der Lösung oder dem Mark des Nahrungsmittels mit dem nun reduzierten Zuckergehalt abgetrennt wird.

2. Verfahren nach Anspruch 1, dadurch gekennzeichnet, daß das Nährmedium zur Anzucht der bestgeeigneten Mikroorganismenspezies empirisch nach sensorischen Gesichtspunkten an das zu behandelnde Nahrungsmittel angepaßt wird.

3. Verfahren nach Anspruch 1 und 2, dadurch gekennzeichnet, daß den Lösungen oder dem Mark saccharose-haltiger Nahrungsmittel vor der Fermentation Invertase in einer Konzentration von 10 bis 1000 mg/l zugesetzt wird.

4. Verfahren nach Anspruch 1 bis 3, dadurch gekennzeichnet, daß über die Wahl der Temperatur und der Fermentationszeit und des Mikroorganismus nur die im Nahrungsmittel enthaltene Glucose und Saccharose abgebaut werden, der Gesamtfructosegehalt aber den Wert des originären Nahrungsmittels beibehält.

5. Verfahren nach Anspruch 1 bis 4, dadurch gekennzeichnet, daß durch Wahl von Temperatur und Fermentationszeit der originäre Gesamtzuckergehalt von Nahrungsmitteln mit einem Glucose/Fructoseverhältnis <0,5 um mindestens 29% und von Nahrungsmitteln mit einem Glucose/Fructoseverhältnis von ca. 1:1 um ca. 40% vermindert wird und nach der Entzuckerung ein Glucose/Fructose-Verhältnis von <0,2, vorzugsweise <0,05, erhalten wird.

6. Verfahren nach Anspruch 1 bis 4, dadurch gekennzeichnet, daß durch geeignete Wahl von Temperatur und Fermentationszeit der originäre Zuckergehalt saccharosefreier Nahrungsmittel um mindestens 25% vermindert wird und ein Gewichtsverhältnis von Glucose/Fructose von größer oder gleich 0,45 erhalten wird.

7. Verfahren nach jedem der Ansprüche 1 bis 5, dadurch gekennzeichnet, daß die Fermentationszeit so gewählt wird, daß kein Abbau der in den Nahrungsmitteln enthaltenen Fruchtsäuren erfolgt.

8. Verfahren nach jedem der Ansprüche 1 bis 5, dadurch gekennzeichnet, daß die Fermentationszeit so gewählt wird, daß mindestens 20% der im Ausgangsmaterial enthaltenen Fruchtsäuren abgebaut werden.

9. Verfahren nach jedem der Ansprüche 1 bis 8, dadurch gekennzeichnet, daß dem Ausgangsmaterial vor dem Versetzen mit der Biomasse empfindliche Bestandteile, wie Aromastoffe, Farbstoffe, Trub u.ä. durch geeignete Verfahren ganz oder teilweise entzogen und nach der Fermentation und der Entfernung der Biomasse der zuckerverminderten Lösung oder dem Mark ganz oder teilweise wieder zugesetzt werden.

10. Verfahren nach jedem der Ansprüche 1 bis 9, dadurch gekennzeichnet, daß nach der Fermentation zur Geschmacksverbesserung unbehandeltes Ausgangsmaterial und/oder Aromen und/oder künstliche Süßstoffe und/oder zur ernährungsphysiologischen Aufwertung Fruchtfleich und/oder Ballaststoffe und/oder Mineralstoffe und/oder Vitamine zum Produkt des Fermentationsprozesses hinzugefügt werden.

11. Verfahren nach jedem der Ansprüche 1 bis 10, dadurch gekennzeichnet, daß das Fermentationsprodukt nach der Abtrennung der Biomasse einer in der Nahrungsmitteltechnologie gebräuchlichen Konzentrierung unterworfen wird.

12. Verfahren nach jedem der Ansprüche 1 bis 11, dadurch gekennzeichnet, daß als Mikroorganismus die Hefe Pichia stipitis mit der Hinterlegungsnummer CBS 5774 oder die Hefe Debaromyces vanriji mit der Hinterlegungsnummer CBS 6454 oder die Hefe Candida shehatae mit der Hinterlegungsnummer ATCC 22984 eingesetzt werden.

13. Verfahren nach Anspruch 1 bis 3 und jedem der Ansprüche 9 bis 11, dadurch gekennzeichnet, daß als Mikroorganismus die dereprimierte Mutante von Pichia stipitis mit der Hinterlegungsnummer DSM 6692 eingesetzt wird.

14. Verfahren nach Anspruch 13, dadurch gekennzeichnet, daß ein um einen Gesamtzuckergehalt von mindestens 20% vermindertes Produkt mit einem Gewichtsverhältnis von Glucose/Fructose von >0,2 erhalten wird.

15. Verfahren nach jedem der vorhergehenden Ansprüche, dadurch gekennzeichnet, daß als Nahrungsmittel Fruchtsäfte und/oder Fruchtmark und/oder Fruchtsaftkonzentrate und/oder Fruchtmarkkonzentrate eingesetzt werden.

16. Verfahren nach Anspruch 15, dadurch gekennzeichnet, daß für die Zuckerverminderung von Orangensaft als Mikroorganismus die Hefe Pichia stipitis mit der Hinterlegungsnummer CBS 5774, für die Zuckerverminderung von Apfelsaft als Mikroorganismus die Hefe Debaromyces vanriji mit der Hinterlegungsnummer CBS 6454 und für die Zuckerverminderung von Traubensaft als Mikroorganismus die Hefe Candida shehatae mit der Hinterlegungsnummer ATCC 22984 eingesetzt werden.

17. Nahrungsmittel, hergestellt gemäß Verfahren nach Anspruch 1 mit gegenüber dem originären Ausgangsprodukt vermindertem Zuckergehalt, dadurch gekennzeichnet, daß die Kennzahlen für die restlichen Inhaltsstoffe außer Zucker und gegebenenfalls Fruchtsäuren im Bereich der natürlichen Schwankungsbreiten der charakteristischen Zusammensetzung des jeweiligen originären Nahrungsmittels liegen.

18. Nahrungsmittel nach Anspruch 17, dadurch gekennzeichnet, daß es einen um mindestens 30%, vorzugsweise 40%, verminderten Zuckergehalt des originären zuckerhaltigen Nahrungsmittels aufweist, bei einem Verhältnis von Glucose/Fructose von < 0,2.

19. Nahrungsmittel nach Anspruch 17, dadurch gekennzeichnet, daß es einen um mindestens 20% verminderten Zuckergehalt des originären zuckerhaltigen Nahrungsmittels aufweist, bei einem Verhältnis von Glucose/Fructose von > 0,2.

20. Nahrungsmittel gemäß Anspruch 17, dadurch gekennzeichnet, daß es ein Getränk aus Orangensaft ist mit einem gegenüber Orangensaft um mindestens 25%, bevorzugt 40% verringerten Zuckergehalt und einem Gewichtsverhältnis von Glucose/Fructose < 0,1, vorzugsweise <0,05.

21. Nahrungsmittel gemäß Anspruch 17 und 19, dadurch gekennzeichnet, daß es ein Getränk aus Orangensaft ist mit einem gegenüber Orangensaft um mindestens 25% verminderten Zuckergehalt und einem Gewichtsverhältnis von Glucose/Fructose von > 0,7.

22. Nahrungsmittel gemäß Anspruch 17 und 18, dadurch gekennzeichnet, daß es ein Getränk aus Apfelsaft ist mit einem gegenüber Apfelsaft um mindestens 30% verminderten Fruchtsäuregehalt.

23. Nahrungsmittel gemäß Anspruch 17 und 19, dadurch gekennzeichnet, daß es ein Getränk aus Traubensaft ist mit einem gegenüber Traubensaft um mindestens 25% verminderten Zuckergehalt und einem Gewichtsverhältnis von Glucose/Fructose von > 0,45.

24. Dereprimierte Mutante der Hefe Pichia stipitis, dadurch gekennzeichnet, daß sie auch in Gegenwart von Glucose Invertase synthetisieren kann und die Hinterlegungsnummer DSM 6692 hat.

25. Verwendung der dereprimierten Mutante gemäß Anspruch 24 zur Verminderung des Zuckergehaltes von Nahrungsmitteln.

## Claims

1. A microbiological process for selective reduction of the sugar content of sugar-containing food while retaining the original specific and sensory properties apart from sweetness, characterised in that
- out of various species of micro-organisms suitable for decomposition of sugar, the species most suitable for the respective food is discovered by subjecting batches of the food treated with the various species of micro-organisms to a sensory ranking test to ISO Guidelines 8587,
- the resulting micro-organism species is incubated for cultivating biomass in a suitable nutrient-containing culture medium,
- the biomass freed from culture medium, in a concentration in the range from log3 to log12 KbE/ml, is then added to a solution or pulp of the food for desugaring, without addition of nutrient salts,
- the previously pasteurised food solution or pulp treated with biomass is fermented at 5 to 40°C, just sufficient oxygen being added with controlled aeration to ensure that no anaerobic decomposition occurs but that constituents sensitive to oxidation in the food solution or pulp are not oxidised,
- fermentation is brought to an end after achieving the desired sugar decomposition and/or the desired glucose/fructose ratio and
- the biomass is partly or completely separated as required from the food solution or pulp, which now has a reduced sugar content.

2. A process according to claim 1, characterised in that the nutrient medium is adapted empirically and in accordance with sensory criteria to the food to be treated, for cultivation of the most suitable species of micro-organism.

3. A process according to claim 1 or 2, characterised in that invertase in a concentration of 10 to 1000 mg/l is added before fermentation to the solutions or pulp of saccharose-containing food.

4. A process according to claims 1 to 3, characterised in that the temperature, the fermentation time and the micro-organism are so chosen that only the glucose and saccharose in the food are decomposed whereas the total fructose content remains the same as in the original food.

5. A process according to claims 1 tom 4, characterised in that the temperature and fermentation time are so chosen that the original total sugar content is reduced by at least 29% in food with a glucose/fructose ratio < 0.5 and by about 40% in food with a glucose/fructose ratio of about 1 : 1, and after desugaring a glucose/fructose ratio of < 0.2, preferably < 0.05 is obtained.

6. A process according to claims 1 to 4, characterised in that the temperature and fermentation time are so chosen that the original sugar content of saccharose-free food is reduced by at least 25% and a ratio by weight of glucose to fructose of 0.45 or more is obtained.

7. A process according to any of claims 1 to 5, characterised in that the fermentation time is so chosen that no decomposition of the fruit acids in the food occurs.

8. A process according to any of claims 1 to 5, characterised in that the fermentation time is so chosen that at least 20% of the fruit acids in the starting material are decomposed.

9. A process according to any of claims 1 to 8, characterised in that sensitive constituents such as flavourings, dyes and sediment are partly or completely withdrawn by suitable methods from the starting material before addition of biomass and are partly or completely returned, after fermentation and removal of the biomass, to the solution or pulp, which now has a reduced sugar content.

10. A process according to any of claims 1 to 9, characterised in that untreated starting material and/or flavourings and/or artificial sweeteners and/or fruit juice for increasing the nutritional value and/or roughage and/or minerals and/or vitamins are added to the product of the fermentation process in order to improve the taste after fermentation.

11. A process according to any of claims 1 to 10, characterised in that after separation of the biomass, the fermentation product is concentrated by methods conventional in food technology.

12. A process according to any of claims 1 to 11, characterised in that the micro-organism used is the yeast Pichia stipitis, deposit number CBS 5774, or the yeast Debaromyces vanriji, deposit number CBS 6454, or the yeast Candida shehatae, deposit number ATCC 22984.

13. A process according to claims 1 to 3 and any of claims 9 to 11, characterised in that the micro-organism used is the de-repressed mutant of Pichia stipitis, deposit number DSM 6692.

14. A process according to claim 13, characterised in that a product is obtained with a total sugar content reduced by at least 20% and a glucose/fructose ratio by weight of > 0.2.

15. A process according to any of the preceding claims, characterised in that the foods used are fruit juices and/or fruit pulp and/or fruit juice concentrates and/or fruit pulp concentrates.

16. A process according to claim 15, characterised in that the micro-organism used for reduction of sugar in orange juice is the yeast Pichia stipitis, deposit number CBS 5774, the micro-organism used for reduction of sugar in apple juice is the yeast Debaromyces vanriji, deposit number CBS 6454, and the micro-organism used for reduction of sugar in grape juice is the yeast Candida shehatae, deposit number ATCC 22984.

17. Food produced by the process of claim 1 and with a reduced sugar content compared with the original starting product, characterised in that the figures for the constituents apart from sugar and optionally fruit acids lie within the natural range of variation in the characteristic composition of the respective original food.

18. A food according to claim 17, characterised in that it has a sugar content reduced by at least 30%, preferably 40%, of the sugar in the original food, at a glucose/fructose ratio of < 0.2.

19. A food according to claim 17, characterised in that it has a sugar content reduced by at least 20% compared with the original sugar-containing food, at a glucose/fructose ratio of > 0.2.

20. A food according to claim 17, characterised in that it is an orange-juice drink with a sugar content reduced by at least 25%, preferably 40%, compared with orange juice and a ratio by weight of glucose to fructose < 0.1, preferably < 0.05.

21. A food according to claim 17 and 19, characterised in that it is an orange-juice drink with a sugar content reduced by at least 25% compared with orange juice and a ratio by weight of glucose to fructose of > 0.7.

22. A food according to claim 17 and 18, characterised in that it is an apple-juice drink with a fruit acid content reduced by at least 30% compared with apple juice.

23. A food according to claim 17 and 19, characterised in that it is a grape-juice drink with a sugar content reduced by at least 25% compared with grape juice and a ratio by weight of glucose/fructose of > 0.45.

24. A de-repressed mutant of the yeast Pichia stipitis, characterised in that it can synthesise invertase even in the presence of glucose, and has the deposit number DSM 6692.

25. Use of the de-repressed mutant according to claim 24 for reducing the sugar content of food.

## Revendications

1. Procédé microbiologique pour la réduction sélective de la teneur en sucre de produits alimentaires sucrés, tout en maintenant les propriétés originaires, spécifiques et sensorielles à l'exception de la "douceur", caractérisé en ce que
- parmi différentes espèces de micro-organismes appropriées pour une dégradation des sucres, l'espèce la mieux appropriée pour le produit alimentaire concerné est déterminée, des charges du produit alimentaire, traitées chacune par les différentes espèces de micro-organismes, étant soumises à un test de classification sensoriel selon les directives ISO 8587,
- l'espèce de micro-organisme ainsi obtenue est mise à incuber, pour le développement d'une biomasse, dans un milieu de culture contenant de la matière nutritive et approprié dans ce but,
- la biomasse libérée du milieu de culture est ensuite fournie, en une concentration de l'ordre de log3 à log12 UfC/ml, à une solution ou à la pulpe du produit alimentaire respectivement à désucrer, sans addition de sels nutritifs,
- la solution ou la pulpe du produit alimentaire auparavant pasteurisée, additionnée de biomasse, est soumise à 5-40°C à une fermentation, de l'oxygène étant amené, sous une aération contrôlée, en quantité précisément suffisante pour que, d'une part, aucune voie de dégradation en anaérobie ne soit suivie et que, d'autre part, les constituants contenus dans la solution ou pulpe et sensibles à l'oxydation ne soient pas encore oxydés,
- la fermentation est achevée après l'obtention de la dégradation souhaitée des sucres et/ou du rapport souhaité de glucose/fructose, et
- la biomasse est, selon ce qui est souhaité, isolée totalement ou partiellement de la solution ou de la pulpe du produit alimentaire ayant la teneur en sucre à présent réduite.

2. Procédé suivant la revendication 1, caractérisé en ce que le milieu nutritif pour le développement de l'espèce de micro-organisme la mieux appropriée est adapté de manière empirique, selon des points de vue sensoriels, au produit alimentaire à traiter.

3. Procédé suivant l'une des revendications 1 et 2, caractérisé en ce que de l'invertase en une concentration de 10 à 1000 mg/l est, avant la fermentation, ajoutée aux solutions ou à la pulpe du produit alimentaire contenant du saccharose.

4. Procédé suivant l'une des revendications 1 à 3, caractérisé en ce que, par le choix de la température et de la durée de fermentation et du microorganisme, seuls le glucose et le saccharose contenus dans le produit alimentaire sont dégradés, la teneur globale en fructose conservant cependant la valeur du produit alimentaire d'origine.

5. Procédé suivant l'une des revendications 1 à 4, caractérisé en ce que, par le choix de la température et de la durée de fermentation, la teneur en sucre globale originaire des produits alimentaires ayant un rapport de glucose/fructose < 0,5 est réduite d'au moins 29 % et celle de produits alimentaires ayant un rapport de glucose/fructose d'environ 1/1 d'environ 40 %, et en ce que, après le désucrage, on obtient un rapport de glucose/fructose de < 0,2, de préférence de < 0,05.

6. Procédé suivant l'une des revendications 1 à 4, caractérisé en ce que, par un choix approprié de la température et de la durée de fermentation, la teneur en sucre originaire de produits alimentaires exempts de saccharose est réduite d'au moins 25 % et en ce qu'un rapport pondéral de glucose/fructose supérieur ou égal à 0,45 est obtenu.

7. Procédé suivant l'une des revendications 1 à 5, caractérisé en ce que la durée de fermentation est choisie de façon qu'aucune dégradation des acides de fruit contenus dans les produits alimentaires n'ait lieu.

8. Procédé suivant l'une des revendications 1 à 5, caractérisé en ce que la durée de fermentation est choisie de façon qu'au moins 20 % des acides de fruit contenus dans la matière de départ soient dégradés.

9. Procédé suivant l'une des revendications 1 à 8, caractérisé en ce que, avant l'addition de la biomasse à la matière de départ, on soutire de celle-ci totalement ou partiellement des éléments sensibles, comme des substances aromatiques, des colorants, un dépôt, et des matières analogues, par des procédés appropriés et en ce que, après la fermentation et l'élimination de la biomasse, on les ajoute à nouveau totalement ou partiellement à la solution ou à la pulpe à teneur en sucre réduite.

10. Procédé suivant l'une quelconque des revendications 1 à 9, caractérisé en ce que, après la fermentation, pour améliorer le goût, de la matière de départ non traitée et/ou des arômes et/ou des matières édulcorantes artificielles et/ou de la chair de fruit destinée à une valorisation physiologique de nutrition et/ou des substances de ballast et/ou des matières minérales et/ou des vitamines sont ajoutés au produit du processus de fermentation.

11. Procédé suivant l'une quelconque des revendications 1 à 10, caractérisé en ce que le produit de fermentation est, après l'isolement de la biomasse, soumis à une concentration usuelle dans la technologie des produits alimentaires.

12. Procédé suivant l'une quelconque des revendications 1 à 11, caractérisé en ce que, comme micro-organisme, on met en oeuvre la levure Pichia stipitis portant le numéro de dépôt CBS 5774 ou la levure Debaromyces vanriji portant le numéro de dépôt CBS 6454 ou la levure Candida shehatae portant le numéro de dépôt ATCC 22984.

13. Procédé suivant l'une des revendications 1 à 3 et des revendications 9 à 11, caractérisé en ce que, comme micro-organisme, on met en oeuvre le mutant déréprimé de Pichia stipitis portant le numéro de dépôt DSM 6692.

14. Procédé suivant la revendication 13, caractérisé en ce qu'on obtient un produit dont la teneur globale en sucre est réduite d'au moins 20 % et qui présente un rapport pondéral de glucose/fructose de > 0,2.

15. Procédé suivant l'une des revendications précédentes, caractérisé en ce que, comme produit alimentaire, on met en oeuvre des jus de fruit et/ou de la pulpe de fruit et/ou des concentrés de jus de fruit et/ou des concentrés de pulpe de fruit.

16. Procédé suivant la revendication 15, caractérisé en ce qu'on met en oeuvre pour la réduction des sucres de jus d'orange, comme micro-organisme, la levure Pichia stipitis portant le numéro de dépôt CBS 5774, pour la réduction des sucres de jus de pomme, comme micro-organisme, la levure Debaromyces vanriji portant le numéro de dépôt CBS 6454 et pour la réduction des sucres de jus de raisin, comme micro-organisme, la levure Candida shehatae portant le numéro de dépôt ATCC 22984.

17. Produit alimentaire, préparé selon le procédé de la revendication 1, ayant une teneur en sucre réduite par rapport au produit de départ d'origine, caractérisé en ce que les valeurs pour les constituants restants en dehors des sucres et éventuellement des acides de fruits se trouvent dans la gamme des variations naturelles de la composition caractéristique du produit alimentaire d'origine respectif.

18. Produit alimentaire suivant la revendication 17, caractérisé en ce qu'il présente une teneur en sucre, réduite d'au moins 30 %, de préférence de 40 %, du produit alimentaire sucré d'origine, pour un rapport de glucose/fructose de < 0,2.

19. Produit alimentaire suivant la revendication 17, caractérisé en ce qu'il présente une teneur en sucre, réduite d'au moins 20 %, du produit alimentaire sucré d'origine, pour un rapport de glucose/fructose de > 0,2.

20. Produit alimentaire suivant la revendication 17, caractérisé en ce qu'il est une boisson à base de jus d'orange présentant une teneur en sucre réduite d'au moins 25 %, de préférence de 40 %, par rapport au jus d'orange, et un rapport pondéral de glucose/fructose de < 0,1, de préférence de < 0,05.

21. Produit alimentaire suivant l'une des revendications 17 et 19, caractérisé en ce qu'il est une boisson à base de jus d'orange comportant une teneur en sucre réduite d'au moins 25 % par rapport au jus d'orange et présentant un rapport pondéral de glucose/fructose de > 0,7.

22. Produit alimentaire suivant l'une des revendications 17 et 18, caractérisé en ce qu'il est une boisson à base de jus de pomme présentant une teneur en acide de fruit réduite d'au moins 30 % par rapport au jus de pomme.

23. Produit alimentaire suivant l'une des revendications 17 et 19, caractérisé en ce qu'il est une boisson à base de jus de raisin présentant une teneur en sucre réduite par rapport au jus de raisin d'au moins 25 % et un rapport pondéral de glucose/fructose de > 0,45.

24. Mutant déréprimé de la levure Pichia stipitis, caractérisé en ce qu'il peut synthétiser de l'invertase même en présence de glucose et en ce qu'il porte le numéro de dépôt DSM 6692.

25. Utilisation du mutant déréprimé selon la revendication 24 pour la réduction de la teneur en sucre de produits alimentaires.
